# EUROPÄISCHE PATENTANMELDUNG

(11) **EP 1 628 118 A2**
(43) Veröffentlichungstag der Anmeldung: **22.02.2006**
(21) Anmeldenummer: 05009186.7
(22) Anmeldetag: 27.04.2005
(51) Int. Cl.: G01F 1/84

(54) **Coriolis-Massendurchflussmessgerät und Verfahren zur Herstellung eines Coriolis-Massendurchflussmessgeräts**

(30) Priorität: 29.07.2004 DE 102004036927; 30.07.2004 DE 102004037370
(71) Anmelder: Krohne AG, 4019 Basel (CH)
(72) Erfinder: Hussain, Youssif, Dr., Weston Favell Northhampton NN3 3DA (GB); Rolph, Chris, Salcey Lawn Hartwell Northampton NN7 2HA (GB); Harrisson, Neil, Duston Northampton NN5 6SR (GB)
(74) Vertreter: Gesthuysen, von Rohr & Eggert

(57) **Zusammenfassung**

Dargestellt und beschrieben sind ein Coriolis-Massendurchflußmeßgerät sowie ein Verfahren zur Herstellung eines Coriolis-Massendurchflußmeßgeräts. Das Coriolis-Massendurchflußmeßgerät weist ein Meßrohr 1 zum Führen eines strömenden Mediums, eine Schwingungserzeugungseinrichtung 2 mit einem Schwingungserzeuger 2 zur Schwingungsanregung des Meßrohrs und eine Schwingungsaufnahmeeinrichtung 5 mit einem Schwingungsaufnehmer 7 zur Erfassung von Schwingungen des Meßrohrs 1 auf. Erfindungsgemäß sind ein erstes Gegenelement 11, das der Schwingungserzeugungseinrichtung 2 auf der gleichen Länge des Meßrohrs 1 gegenüberliegt, und ein zweites Gegenelement 12 vorgesehen, das der Schwingungsaufnahmeeinrichtung 5 auf der gleichen Länge des Meßrohrs 1 gegenüberliegt, wobei die Masse des ersten Gegenelements 11 der Masse der Schwingungserzeugungseinrichtung 2 entspricht und die Masse des zweiten Gegenelements 12 der Masse der Schwingungsaufnahmeeinrichtung 5 entspricht. Damit wird ein Coriolis-Massendurchflußmeßgerät mit hoher Meßgenauigkeit erzielt.

## Beschreibung

Die Erfindung betrifft ein Coriolis-Massendurchflußmeßgerät, mit einem Meßrohr zum Führen eines strömenden Mediums, einer Schwingungserzeugungseinrichtung mit einem Schwingungserzeuger zur Schwingungsanregung des Meßrohrs und einer Schwingungsaufnahmeeinrichtung mit einem Schwingungsaufnehmer zur Erfassung von Schwingungen des Meßrohrs. Die Erfindung betrifft ferner ein Verfahren zur Herstellung eines Coriolis-Massendurchflußmeßgeräts, mit einem Meßrohr zum Führen eines strömenden Mediums, einer Schwingungserzeugungseinrichtung mit einem Schwingungserzeuger zur Schwingungsanregung des Meßrohrs und einer Schwingungsaufnahmeeinrichtung mit einem Schwingungsaufnehmer zur Erfassung von Schwingungen des Meßrohrs.

Ein Coriolis-Massendurchflußmeßgerät, wie eingangs beschrieben, ist es z. B. aus der WO 95/16897 A2 bekannt. Bei dem dort beschriebenen Coriolis-Massendurchflußmeßgerät ist vorgesehen, Umfangsschwingungen des Meßrohrs anzuregen, also derartige Schwingungen, bei denen sich der Querschnitt des Meßrohrs wenigstens im Bereich der Schwingungsanregung aufgrund der Schwingung geometrisch ändert. Ein Coriolis-Massendurchflußmeßgerät, bei dem eine ähnliche Schwingungsanregung von Umfangsschwingungen des Meßrohrs vorgesehen ist, ist in der WO 01/92833 A1 beschrieben. Das dort dargestellte Coriolis-Massendurchflußmeßgerät zeichnet sich insbesondere dadurch aus, daß das Meßrohr eine derartige Wandstärke aufweist, die wesentlich geringer als der Radius des Meßrohrs ist, so daß Umfangsschwingungen, die mit einer Deformation der Mantelflächen des Meßrohrs einhergehen, besonders einfach erzeugbar ist.

Darüber hinaus ist bei diesem Coriolis-Massendurchflußmeßgerät vorgesehen, daß die Länge des Meßrohrs wenigstens in der gleichen Größenordnung wie der Radius des Meßrohrs liegt. Das in der WO 01/92833 A1 beschriebene Coriolis-Massendurchflußmeßgerät weist damit ein derartiges Meßrohr auf, das aufgrund seiner Kürze und seiner großen lichten Weite nur eine geringe Drosselung des Stroms des Mediums zur Folge hat und damit nur geringe Störwirkungen auf den Fluß im Rohrleitungssystems aufweist, in das das Coriolis-Massendurchflußmeßgerät eingebaut ist.

Problematisch bei den zuvor genannten, aus dem Stand der Technik bekannten Coriolis-Massendurchflußmeßgeräten ist jedoch, daß die erzielbare Meßgenauigkeit unbefriedigend ist, insbesondere häufige Nachkalibrierungen erforderlich sind.

Damit ist es die Aufgabe der Erfindung, ein derartiges Coriolis-Massendurchflußmeßgerät bzw. ein derartiges Verfahren zur Herstellung eines Coriolis-Massendurchflußmeßgeräts anzugeben, mit denen eine hohe Meßgenauigkeit erzielbar ist.

Ausgehend von dem eingangs beschriebenen Coriolis-Massendurchflußmeßgerät ist die zuvor hergeleitete und aufgezeigte Aufgabe dadurch gelöst, daß ein erstes Gegenelement vorgesehen ist, das der Schwingungserzeugungseinrichtung auf der gleichen Länge des Meßrohrs gegenüberliegt, ein zweites Gegenelement vorgesehen ist, das der Schwingungsaufnahmeeinrichtung auf der gleichen Länge des Meßrohrs gegenüberliegt, die Masse des ersten Gegenelements der Masse der Schwingungserzeugungseinrichtung entspricht und die Masse des zweiten Gegenelements der Masse der Schwingungsaufhahmeeinrichtung entspricht, wobei wenigstens ein Gegenelement ein Gegengewicht aufweist.

Erfindungswesentlich ist damit zuerst einmal, daß der Schwingungserzeugungseinrichtung und der Schwingungsaufnahmeeinrichtung jeweils ein derartiges Gegenelement auf der gleichen Länge des Meßrohrs gegenüberliegt, das aufgrund seiner jeweils gleichen Masse zu einem ausbalancierten Meßrohr führt. Darüber hinaus ist erfindungswesentlich, daß dabei wenigstens ein Gegenelement ein Gegengewicht aufweist. Als Gegengewicht ist dabei vorliegend und im folgenden in Abgrenzung zu einem Schwingungserzeuger oder einem Schwingungsaufneher ein passives Gewicht gemeint, das nicht aktiv auf das Meßrohr einwirkt, sondern lediglich aufgrund seiner Masse.

Gemäß einer bevorzugten Weiterbildung der Erfindung kann dabei insbesondere vorgesehen sein, daß wenigstens eine weitere Schwingungserzeugungseinrichtung mit einem Schwingungserzeuger zur Schwingungsanregung des Meßrohrs oder/und eine weitere Schwingungsaufnahmeeinrichtung mit einem Schwingungsaufnehmer zur Erfassung von Schwingungen des Meßrohrs vorgesehen sind, wobei jeweils ein Gegenelement vorgesehen ist, dessen Masse der Masse der Schwingungserzeugungseinrichtung bzw. der Masse der Schwingungsaufnahmeeinrichtung entspricht und das der Schwingungserzeugungseinrichtung bzw. der Schwingungsaufnahmeeinrichtung auf der jeweils gleichen Länge des Meßrohrs gegenüberliegt. Das heißt also, daß die grundlegende erfinderische Idee auch dann anwendbar ist, wenn mehrere Schwingungserzeugungseinrichtungen mit jeweils einem Schwingungserzeuger oder/und mehrere Schwingungsaufnahmeeinrichtungen mit jeweils einem Schwingungsaufnehmer vorgesehen sind. Wesentlich ist also, daß durch ein jeweiliges Gegenelement mit gleicher Masse wie die Schwingungserzeugungseinrichtung bzw. die Schwingungsaufnahmeeinrichtung, der das Gegenelement gegenüberliegt, ein ausbalanciertes Meßrohr erzielt wird.

Grundsätzlich kann für eine Schwingungserzeugungseinrichtung und für eine Schwingungsaufnahmeeinrichtung jeweils nur ein Schwingungserzeuger bzw. ein Schwingungsaufnehmer ohne weitere Komponenten vorgesehen sein. Gemäß einer bevorzugten Weiterbildung der Erfindung ist jedoch vorgesehen, daß wenigstens eine Schwingungserzeugungseinrichtung oder/und wenigstens eine Schwingungsaufnahmeeinrichtung jeweils ein Zusatzgewicht aufweist. Dabei ist als Zusatzgewicht auch wieder ein solches Element gemeint, das rein passiv wirkt. Auf diese Weise ist es möglich, nicht nur ein ausbalanciertes Meßrohr zu erzielen, indem derartige Gegenelemente vorgesehen werden, deren Masse gerade der Masse eines jeweiligen Schwingungserzeugers bzw. Schwingungsaufnehmers entspricht, sondern es ist auch möglich, die am Ort der Schwingungserzeugungseinrichtung bzw. der Schwingungsaufnahmeeinrichtung wirkenden Massen und damit die Massen an den gegenüberliegenden Orten individuell festzulegen.

Insbesondere ist es dabei möglich, derartige Massen zu wählen, die minimale Schwingungsverluste bewirken. Es hat sich nämlich herausgestellt, daß die Schwingungsverluste bei der Schwingung des Meßrohrs abhängig von der jeweiligen Masse der Schwingungserzeugungseinrichtung bzw. der Schwingungsaufnahmeeinrichtung sowie des jeweiligen Gegenelements sind. Das heißt, daß eine Beeinflussung der Schwingungsverluste über eine Anpassung der jeweiligen Massen möglich ist. Daß minimale Schwingungsverluste bewirkt werden, bedeutet dabei insbesondere, daß die Schwingungsenergie bei angeregtem Meßrohr im Meßrohr bleibt und nicht oder jedenfalls nur in vernachlässigbarem Umfang in das Rohrsystem übertritt, in das das Coriolis-Massendurchflußmeßgerät eingebaut ist.

Dies hat mehrere Vorteile: Einerseits ist bei geringen Schwingungsverlusten eine entsprechend geringere Anregungsleistung ausreichend, um das Coriolis-Massendurchflußmeßgerät zu betreiben. Andererseits gilt jedoch auch, daß von dem Meßrohr in das Rohrsystem übergetretene Schwingungen zurückreflektiert werden können, so daß die eigentliche Massendurchflußmessung, die ja in der phasengenauen Erfassung von Schwingungen des Meßrohrs besteht, gestört werden kann. Insbesondere haben derartige Rückreflektionen negative Auswirkungen auf die Stabilität des Nullpunkts sowie auf die Sensitivität des Coriolis-Massendurchflußmeßgeräts.

Bezüglich der Ausbildung der Gegenelemente gibt es verschiedene Möglichkeiten. Gemäß einer bevorzugten Weiterbildung der Erfindung ist jedoch vorgesehen, daß alle Gegenelemente jeweils ein Gegengewicht aufweisen, insbesondere aus diesem Gegengewicht bestehen. Das heißt, daß das Gegengewicht jeweils bezüglich seiner Masse an die Masse der gegenüberliegenden Schwingungserzeugungseinrichtung bzw. Schwingungsaufnahmeeinrichtung angepaßt wird. Gemäß einer anderen bevorzugten Weiterbildung der Erfindung kann jedoch auch vorgesehen sein, daß wenigstens ein Gegenelement außer einem Gegengewicht auch einen Schwingungserzeuger oder einen Schwingungsaufnehmer aufweist. Dabei kann insbesondere vorgesehen sein, daß einer Schwingungserzeugungseinrichtung ein Gegenelement mit einem Schwingungsaufnehmer und einer Schwingungsaufnahmeeinrichtung ein Gegenelement mit einem Schwingungserzeuger gegenüberliegt.

Grundsätzlich kommt eine Vielzahl von Ausgestaltungen und Schwingungsanregungen des Meßrohrs des Coriolis-Massendurchflußmeßgeräts in Betracht. Wie zuvor schon angedeutet, ist das vorliegend beschriebene Coriolis-Massendurchflußmeßgerät jedoch insbesondere für einen derartigen Betrieb geeignet, bei dem Umfangsschwingungen des Meßrohrs erzeugt werden, also derartige Schwingungen, bei denen sich der Querschnitt des Meßrohrs während der Schwingungen geometrisch ändert. In diesem Zusammenhang ist es gemäß einer bevorzugten Weiterbildung der Erfindung vorgesehen, daß das Meßrohr im Verhältnis zu seinem Radius eine hinreichend geringe Wandstärke aufweist, um die einfache Erzeugung und Erfassung von Umfangsschwingungen zuzulassen. Dabei ist es besonders bevorzugt, daß die Wandstärke des Meßrohrs um wenigstens den Faktor 50 geringer ist als der Radius des Meßrohrs. Weiterhin ist es in diesem Zusammenhang besonders bevorzugt, daß die Wandstärke kleiner oder gleich 0,5 mm, vorzugsweise kleiner oder gleich 0,25 mm, ist.

Um durch das Coriolis-Massendurchflußmeßgerät nur eine geringe Drosselstelle zu erzeugen, ist es gemäß einer bevorzugten Weiterbildung der Erfindung ferner vorgesehen, daß die Länge des Meßrohrs in der Größenordnung des Radius des Meßrohrs liegt. Entsprechendes ist insbesondere deshalb möglich, da keine Schwingung des Meßrohrs insgesamt, wie z. B. bei einer schwingenden Saite, sondern lediglich eine Umfangsschwingung des Meßrohrs, also eine Deformation der Mantelflächen des Meßrohrs erfolgt, was durch die geringe Wandstärke des Meßrohrs erleichtert wird. Dabei ist schließlich gemäß einer bevorzugten Weiterbildung der Erfindung vorgesehen, daß das Verhältnis von Länge des Meßrohrs zu Radius des Meßrohrs kleiner oder gleich 6, vorzugsweise kleiner oder gleich 4 ist.

Schließlich sehen bevorzugte Weiterbildungen der Erfindung vor, daß das Meßrohr an seinen beiden Enden jeweils eine Ankopplungseinrichtung zum Anschluß des Meßrohrs an eine Rohrleitung aufweist, wobei die Ankopplungseinrichtung derart ausgebildet ist, daß eine "weiche" Ankopplung des Meßrohrs an das Rohrleitungssystem erzielt wird. Insbesondere wird eine derartige "weiche" Ankopplung des Meßrohrs an das Rohrleitungssystem dadurch erzielt, daß als Ankopplungseinrichtungen Bälge vorgesehen sind. Der Übergang von Schwingungen aus dem Meßrohr des Coriolis-Massendurchflußmeßgerät in das Rohrleitungssystem und damit mögliche in das Meßrohr zurückreflektierte Störschwingungen werden damit weitestgehend ausgeschlossen sofern sie bei dem erfindungsgemäßen Coriolis-Massendurchflußmeßgerät überhaupt noch auftreten.

Im übrigen ist es in diesem Zusammenhang zur Entkopplung des Meßrohrs des Coriolis-Massendurchflußmeßgeräts von dem Rohrleitungssystem hilfreich, wenn gemäß einer bevorzugten Weiterbildung der Erfindung in den beiden Endbereichen des Meßrohrs jeweils eine Endmasse vorgesehen ist. Diese Endmasse verläuft vorzugsweise umfangsmäßig, insbesondere ringförmig um das Meßrohr herum.

Das erfindungsgemäße Verfahren zur Herstellung eines Coriolis-Massendurchflußmeßgeräts ist ausgehend von dem eingangs beschriebenen Verfahren dadurch gekennzeichnet, daß ein erstes Gegenelement vorgesehen wird, das der Schwingungserzeugungseinrichtung auf der gleichen Länge des Meßrohrs gegenüberliegt, ein zweites Gegenelement vorgesehen wird, das der Schwingungsaufnahmeeinrichtung auf der gleichen Länge des Meßrohrs gegenüberliegt, die Masse der Schwingungserzeugungseinrichtung und die Masse der Schwingungsaufnahmeeinrichtung variiert werden, wobei die Masse des ersten Gegenelements jeweils derart gewählt wird, daß sie der Masse der Schwingungserzeugungseinrichtung entspricht, und die Masse des zweiten Gegenelements jeweils derart gewählt wird, daß sie der Masse der Schwingungsaufnahmeeinrichtung entspricht, und für eine vorbestimmte Anregungsfrequenz des Meßrohrs bestimmt wird, bei welcher jeweiligen Masse der Schwingungserzeugungseinrichtung bzw. der Schwingungsaufnahmeeinrichtung die geringsten Schwingungsverluste auftreten.

Erfindungsgemäß ist also vorgesehen, daß bei der Herstellung des Coriolis-Massendurchflußmeßgeräts verschiedene Massen der Schwingungserzeugungseinrichtung bzw. der Schwingungsaufnahmeeinrichtung durchgetestet werden, um festzustellen, bei welcher jeweiligen Masse der Schwingungserzeugungseinrichtung bzw. der Schwingungsaufnahmeeinrichtung die geringsten Schwingungsverluste auftreten. Dabei wird natürlich jeweils auch die Masse des entsprechenden Gegenelements angepaßt, nämlich derart, daß die Masse des jeweiligen Gegenelements der Masse der Schwingungserzeugungseinrichtung bzw. der Masse der Schwingungsaufnahmeeinrichung entspricht, die ihr jeweils gegenüberliegt.

In diesem Zusammenhang ist es auch wesentlich, darauf hinzuweisen, daß das Variieren der Massen einerseits im Experiment, also an dem Meßrohr des Coriolis-Massendurchflußmeßgeräts selbst, durchgeführt werden kann, es andererseits jedoch auch möglich ist, das Verhalten des Meßrohrs des Coriolis-Massendurchflußmeßgeräts mit Hilfe eines Modells und numerischer Methoden zu simulieren, z. B. mit Hilfe eines Computerprogramms.

Für die Bestimmung, bei welcher jeweiligen Masse der Schwingungserzeugungseinrichtung bzw. der Schwingungsaufnahmeeinrichtung die gering-sten Schwingungsverluste auftreten, gibt es verschiedene Möglichkeiten. Gemäß einer bevorzugten Weiterbildung der Erfindung ist vorgesehen, daß die Bestimmung, bei welcher jeweiligen Masse der Schwingungserzeugungseinrichtung bzw. der Schwingungsaufnahmeeinrichtung die geringsten Schwingungsverluste auftreten, darüber erfolgt, bei welcher jeweiligen Masse der Schwingungserzeugungseinrichtung bzw. der Schwingungsaufnahmeeinrichtung die geringste Schwingungsamplitude an den Enden des Meßrohrs erzielt wird.

Gemäß einer alternativen bevorzugten Weiterbildung der Erfindung ist vorgesehen, daß die Bestimmung, bei welcher jeweiligen Masse der Schwingungserzeugungseinrichtung bzw. der Schwingungsaufnahmeeinrichtung die geringsten Schwingungsverluste auftreten, darüber erfolgt, bei welcher der jeweiligen Masse der Schwingungserzeugungseinrichtung bzw. der Schwingungsaufnahmeeinrichtung die geringste Anregungsleistung zur Erzielung einer vorbestimmten Schwingungsamplitude erforderlich ist.

Es ist gemäß einer bevorzugten Weiterbildung ferner vorgesehen, daß als vorbestimmte Anregungsfrequenz des Meßrohrs eine Resonanzfrequenz des Meßrohrs, vorzugsweise in dem vom Medium durchströmten Zustand des Meßrohrs, gewählt wird.

Weiterhin ist gemäß einer bevorzugten Weiterbildung der Erfindung vorgesehen, daß zum Variieren der Masse der Schwingungserzeugungseinrichtung und/oder der Masse der Schwingungsaufnahmeeinrichtung der Schwingungserzeugungseinrichtung bzw. der Schwingungsaufnahmeeinrichtung jeweils ein Zusatzgewicht hinzugefügt wird. Das heißt also, daß das Hinzufügen von Zusatzgewichten mit unterschiedlichen Massen zu entsprechend unterschiedlichen Massen der Schwingungserzeugungseinrichtung bzw. der Schwingungsaufnahmeeirichtung führt. Dabei gilt natürlich, daß die Masse des jeweiligen Gegenelements entsprechend angepaßt werden muß. Im übrigen kann diese Vorgehensweise nicht nur dann vorgesehen werden, wenn lediglich eine Schwingungserzeugungseinrichtung bzw. eine Schwingungsaufnahmeeinrichtung vorgesehen ist. Vielmehr ist das erfindungsgemäße Verfahren auch dann anwendbar, wenn mehrere Schwingungserzeugungseinrichtungen oder/und mehrere Schwingungsaufnahmeeinrichtungen mit entsprechenden Gegenelementen vorgesehen werden.

Im einzelnen gibt es nun eine Vielzahl von Möglichkeiten, das erfindungsgemäße Coriolis-Massendurchflußmeßgerät bzw. das erfindungsgemäße Herstellungsverfahren für ein Coriolis-Massendurchflußmeßgerät auszugestalten und weiterzubilden. Dazu wird auf die den unabhängigen Patentansprüchen nachgeordneten Patentansprüche sowie auf die nachfolgende Beschreibung bevorzugter Ausführungsbeispiele der Erfindung unter Bezugnahme auf die Zeichnung verwiesen. In der Zeichnung zeigt
- Fig. 1: schematisch den Aufbau eines Coriolis-Massendurchflußmeßgeräts gemäß einem ersten bevorzugten Ausführungsbeispiel der Erfindung und
- Fig. 2: schematisch den Aufbau eines Coriolis-Massendurchflußmeßgeräts gemäß einem zweiten bevorzugten Ausführungsbeispiel der Erfindung.

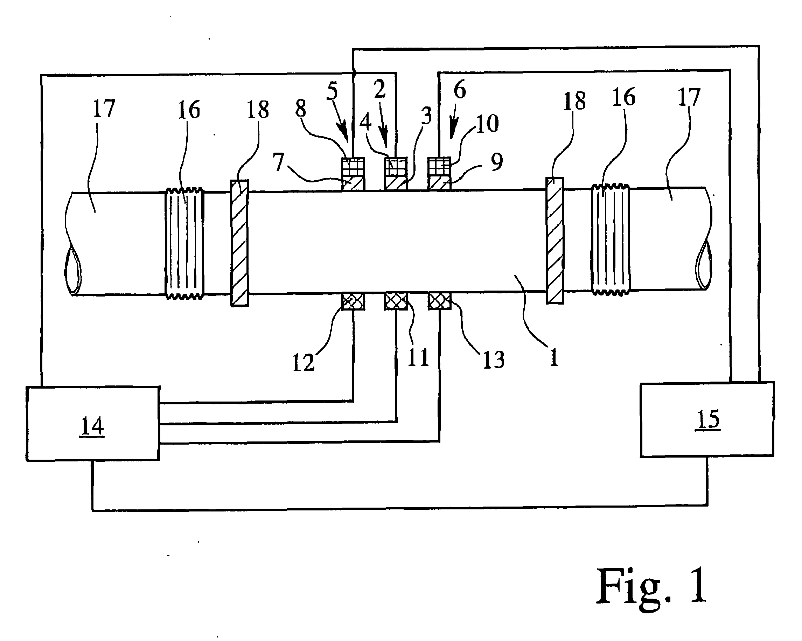

Das aus Fig. 1 ersichtliche, schematisch dargestellte Coriolis-Massendurchflußmeßgerät weist ein Meßrohr 1 auf, das im Betrieb des Coriolis-Massendurchflußmeßgeräts von einem nicht weiter dargestellten Medium durchströmt wird. Zur Schwingungsanregung des Meßrohrs 1 ist eine Schwingungserzeugungseinrichtung 2 mit einem Schwingungserzeuger 3 vorgesehen, und zwar in Längsrichtung des Meßrohrs 1 gesehen genau in der Mitte des Meßrohrs 1. Außer dem Schwingungserzeuger 3 weist die Schwingungserzeugungseinrichtung 2 ein Zusatzgewicht 4 auf. In Längsrichtung des Meßrohrs 1 gesehen jeweils zur Schwingungserzeugungseinrichtung 2 versetzt sind eine erste Schwingungsaufnahmeeinrichtung 5 und eine zweite Schwingungsaufnahmeeinrichtung 6 vorgesehen. Dabei weist die erste Schwingungsaufnahmeeinrichtung 5 einen Schwingungsaufnehmer 7 und ein Zusatzgewicht 8 auf; und die zweite Schwingungsaufnahmeeinrichtung 6 weist ebenfalls einen Schwingungsaufnehmer 9 und ein Zusatzgewicht 10 auf. Dabei darf darauf hingewiesen werden, daß die Darstellung in Fig. 1 rein schematisch ist, also nicht zwingend eine Anordnung der Zusatzgewichte 4, 8, 10 relativ zum Schwingungserzeuger 3 bzw. den Schwingungsaufnehmern 7, 9 vorgesehen sein muß, wie dargestellt.

Die erste Schwingungsaufnahmeeinrichtung 5 und die zweite Schwingungsaufnahmeeinrichtung 6 weisen jeweils den gleichen Abstand von der Schwingungserzeugungseinrichtung 2 auf, wobei die Schwingungserzeugungseinrichtung 2, die erste Schwingungsaufnahmeeinrichtung 5 und die zweite Schwingungsaufnahmeeinrichtung 6 insgesamt längs einer Linie angeordnet sind, die parallel zur Längsachse des Meßrohrs 1 verläuft.

Der Schwingungserzeugungseinrichtung 2, der ersten Schwingungsaufnahmeeinrichtung 5 und der zweiten Schwingunsaufnahmeeinrichtung 6 jeweils um 180° auf der jeweils gleichen Länge des Meßrohrs gegenüberliegend sind Gegenelemente 11, 12, 13 vorgesehen, und zwar das Gegenelement 11 gegenüber der Schwingungserzeugungseinrichtung 2, das Gegenelement 12 gegenüber der ersten Schwingungsaufnahmeeinrichtung 5 und das Gegenelement 13 gegenüber der zweiten Schwingungsaufnahmeeinrichtung 6. Dabei gilt nun, daß die Masse des Gegenelements 11 gerade der Masse der Schwingungserzeugungseinrichtung 2 entspricht, die Masse des Gegenelements 12 gerade der Masse der ersten Schwingungsaufnahmeeinrichtung 5 entspricht und die Masse des Gegenelements 13 gerade der Masse der zweiten Schwingungsaufnahmeeinrichtung 6 entspricht. Das heißt, daß sich die jeweilige Masse eines Gegenelements 11, 12, 13 zusammensetzt aus der Masse des Schwingungserzeugers 3 bzw. des Schwingungsaufnehmers 7, 9 und der Masse des jeweiligen Zusatzgewichts 4, 8, 10. Auf diese Weise wird nicht nur ein ausbalanciertes Meßrohr 1 erzielt, da die Massen einander gegenüberliegenden Einrichtungen gleich groß sind, sondern aufgrund der konkret gewählten Massen wird ein optimiertes Schwingungsverhalten des Meßrohrs 1 erzielt, nämlich ein derartiges Schwingungsverhalten, bei dem die Schwingungsverluste durch ein Austreten von Schwingungen aus dem Meßrohr 1 an das Rohrleitungssystem 17, in das das Meßrohr 1 eingebaut ist, minimal ist.

Um eine solche optimierte Einbausituation bezüglich des Schwingungsverhaltens des Meßrohrs 1 des Coriolis-Massendurchlfußmeßgeräts gemäß dem ersten bevorzugten Ausführungsbeispiel der Erfindung zu erzielen, wird bei der Herstellung des Coriolis-Massendurchflußmeßgeräts wie folgt vorgegangen: Bei der Anordnung der Schwingungserzeugungseinrichtung 2, der ersten Schwingungsaufnahmeeinrichtung 5 und der zweiten Schwingungsaufnahmeeinrichtung 6 sowie der jeweils gegenüberliegenden Gegenelemente 11, 12, 13 wird deren Masse variiert. Dabei wird also bei unterschiedlichen Massen und einer vorbestimmten Anregungsfrequenz des Meßrohrs 1, nämlich bei seiner ersten Resonanzfrequenz im vom Medium durchströmten Zustand, ermittelt, bei welcher jeweiligen Masse die geringsten Schwingungsverluste auftreten.

Im allgemeinen zeigt sich dabei, daß ein optimales Schwin-gungsverhalten noch nicht dadurch erzielt wird, daß dem Schwingungserzeuger 3 und den Schwingungsaufnehmern 7, 9 jeweils ein derartiges Gegenelement 11, 12, 13 zugeordnet wird, dessen Masse gerade der Masse des Schwingungserzeugers 3 bzw, der Schwingungsaufnehmer 7, 9 entspricht. Vielmehr zeigt sich häufig, daß das zusätzliche Vorsehen eines Zusatzge-wichts 4 am Ort des Schwingungserzeugers 3 und von Zusatzgewichten 8, 10 am jeweiligen Ort der Schwingungsaufnehmer 7, 9 zu einem besseren Schwingungsverhalten bezüglich der Konservierung der Schwingungsenergie im Meßrohr 1 führt. Dabei werden die Zusatzgewichte 4, 8, 10 im übrigen vorzugsweise derart angeordnet, daß der jeweilige Masseschwerpunkt der Schwingungserzeugungseinrichtung 2, bestehend aus dem Schwingungserzeuger 3 und dem Zusatzgewicht 4, der ersten Schwingungsaufnahmeeinrichtung 5, bestehend aus dem Schwingungsaufnehmer 7 und dem Zusatzgewicht 8, sowie der zweiten Schwingungsaufnahmeeinrichtung 6, bestehend aus dem Schwingungsaufnehmer 9 und dem Zusatzgewicht 10, verglichen mit der Anordnung lediglich des Schwingungserzeugers 3, des Schwingungsaufnehmers 7 und des Schwingungsaufnehmers 9 auf der gleichen Länge des Meßrohrs 1 verbleibt.

Im Meßbetrieb des Coriolis-Massendurchflußmeßgeräts werden mit dem Schwingungserzeuger 3, der von einer Schwingungsanregungssteuereinrichtung 14 angesteuert wird, Umfangsschwingungen des Meßrohrs 1 erzeugt. Dazu ist ein Meßrohr 1 vorgesehen, das im Verhältnis zu seinem Radius eine hinreichend geringe Wandstärke aufweist, um mit dem Schwingungserzeuger 3 anregbare und mit den Schwingungsaufnehmern 7, 9 erfaßbare Umfangsschwingungen des Meßrohrs 1 zuzulassen, wobei auch Coriolis-Schwingungen erfaßt werden können. Konkret ist dazu vorgesehen, daß die Wandstärke des Meßrohrs 1 wenigstens um den Faktor 50 geringer ist als der Radius des Meßrohrs 1, wobei eine Wandstärke des Meßrohrs 1 gewählt wird, die geringer ist als 0,5 mm. Damit kann, wie Fig. 1 entnehmbar, eine derartige kurze Länge des Meßrohrs 1 erzielt werden, die in der Größenordnung des Radius des Meßrohrs 1 liegt. Die Schwingungsaufnehmer 7, 9 dienen, wie üblich, zur Erfassung des Massendurchflusses, indem die erfaßten Signale einer Auswerteeinrichtung 15 zugeführt werden, in der eine phasensensitive Auswertung der Signale erfolgt.

Das Coriolis-Massendurchflußmeßgerät gemäß dem vorliegend beschriebenen ersten bevorzugten Ausführungsbeispiel der Erfindung weist weitere Maßnahme auf, um die Meßgenauigkeit und die Störanfälligkeit zu verringern. Das Meßrohr 1 ist nämlich über aus Bälge ausgebildete Ankopplungseinrichtungen 16 mit dem Rohrleitungssystem 17 verbunden, in das das Coriolis-Massendurchflußmeßgerät eingebaut ist, so daß eine "weiche" Ankopplung des Meßrohrs 1 an das Rohrleitungssystem 17 erzielt wird. Auf diese Weise wird quasi eine schwingungsmäßige Entkopplung des Meßrohrs 1 von dem Rohrleitungssystem 17 erzielt, sofern überhaupt noch Schwingungen aus dem Meßrohr 1 in das Rohrleitungssystem überzutreten drohen, was mit der Problematik der von dort reflektierten Schwingungen zurück in das Meßrohr 1 verbunden ist.

Darüber hinaus ist gemäß dem vorliegend beschriebenen ersten bevorzugten Ausführungsbeispiel der Erfindung vorgesehen, daß das Meßrohr 1 in seinen beiden Endbereichen jeweils eine umfangsmäßig, nämlich ringförmig verlaufende Endmasse 18 aufweist. In der Praxis hat sich gezeigt, daß diese Endmassen 18 ganz wesentlich dazu beitragen, das Meßrohr 1 von dem Rohrleitungssystem 17 schwingungsmäßig weiter zu isolieren. Insgesamt wird nämlich durch die als Bälge ausgebildeten Ankopplungseinrichtungen 16 und die Endmassen 18 zusammen ein Frequenzfilter erzeugt, das die schwingungsmäßige Wechselwirkung mit dem Rohrleitungssystem 17 ganz wesentlich vermindert. Darüber hinaus werden aufgrund des ausbalancierten Meßrohrs mit den erhöhten Massen aufgrund der Zusatzgewichte 4, 8, 10 und der entsprechenden Gegenelemente 11, 12, 13, wie zuvor erläutert, praktisch keine unsymmetrischen Schwingungen mehr erzeugt, die das System bei herkömmlichen Coriolis-Meßgeräten wesentlich gestört haben.

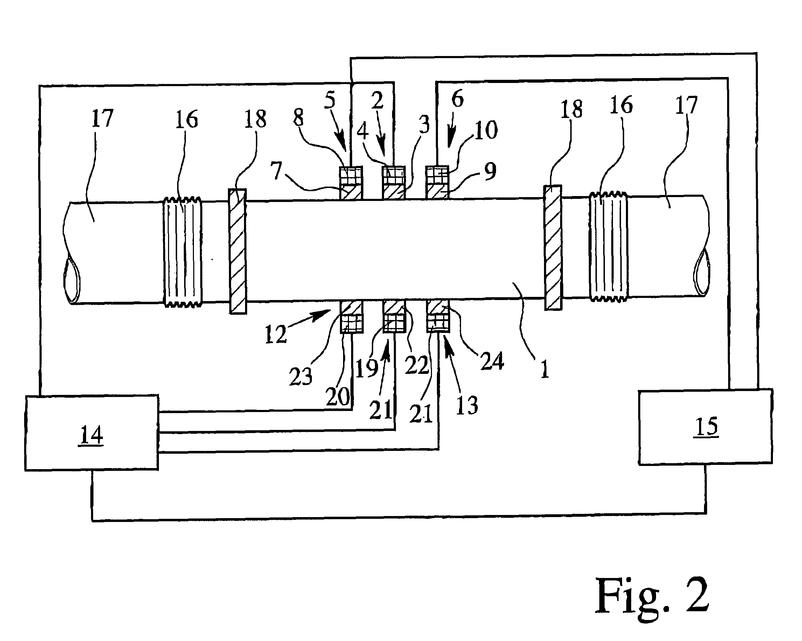

Aus Fig. 2 ist nun ein zweites bevorzugtes Ausführungsbeispiel der Erfindung ersichtlich. Der Aufbau des dort gezeigten Coriolis-Massendurchflußmeßgeräts entspricht im wesentlichen dem Aufbau des zuvor beschriebenen Coriolis-Massendurchflußmeßgeräts gemäß dem ersten bevorzugten Ausführungsbeispiel bis auf die Tatsache, daß die Gegenelemente 11, 12, 13 nicht rein passiv ausgebildet sind, also nicht lediglich als Gegengewicht. Vielmehr ist vorgesehen, daß die Gegenelemente 11, 12, 13 neben einem Gegengewicht 19, 20, 21 auch einen Schwingungsaufnehmer 22 bzw. einen Schwingungserzeuger 23, 24 aufweisen. Konkret ist nämlich vorgesehen, daß der Schwingungserzeugungseinrichtung 2 das Gegenelement 11 gegenüberliegt, das aus dem Schwingungsaufnehmer 22 und dem Gegengewicht 19 besteht, daß der ersten Schwingungsaufnahmeeinrichtung 5 das zweite Gegenelement 12 gegenüberliegt, das aus dem Gegengewicht 20 und dem Schwingungserzeuger 23 besteht, und daß der zweiten Schwingungsaufnahmeeinrichtung 6 das dritte Gegenelement 13 gegenüberliegt, das aus dem Gegengewicht 21 und dem Schwingungserzeuger 24 besteht.

Durch das zusätzliche Vorsehen des Schwingungsaufnehmers 22 und der Schwingungserzeuger 23, 24 ergeben sich folgende Möglichkeiten: Das von dem Schwingungsaufnehmer 22 erfaßte Schwingungssignal wird der Schwingungsanregungssteuereinrichtung 14 zugeführt, die die Schwingungsanregung des Meßrohrs 1 steuert, nämlich über die Schwingungsanregung des Schwingungserzeugers 3 auf der anderen Seite des Meßrohrs 1. Durch die spezielle Anordnung des Schwingungsaufnehmers 22 auf der gleichen Länge des Meßrohrs 1 direkt gegenüber dem für die Schwingungsanregung des Meßrohrs 1 im wesentlichen maßgebende Schwingungserzeuger 3 wird ein Feeback-Signal durch den Schwingungsaufnehmer 22 erfaßbar, das in der Schwingungsanregungssteuereinrichtung 14 für die Ansteuerung des Schwingungserzeugers 3 genutzt werden kann, z. B. im Rahmen einer Nachführung der Anregungsfrequenz auf eine temperaturabhängige Resonanzfrequenz des Meßrohrs mittels eines PLL (Phase Locked Loop).

Außerdem wird durch die zusätzlichen Schwingungserzeuger 23, 24 eine Anregung des Meßrohrs 1 in einem zusätzlichen Mode zum Anregungs-Mode möglich, z. B. im Coriolis-Mode. Damit eröffnet sich die Möglichkeit einer Echtzeit-Bestimmung charakteristischer Parameter, wie der Sensitivität und/ oder des Nullpunkts des Coriolis-Massendurchflußmeßgeräts, wie z. B. in der DE 100 02 635 A1 grunsätzlich beschrieben. Dort ist die Anregung des Meßrohrs 1 des Coriolis-Massendurchflußmeßgeräts insgesamt, also wie eine Saite, beschrieben, während vorliegend Umfangsschwingungen des Meßrohrs 1 angeregt werden sollen. Die Grundsätze des in der DE 100 02 635 A1 beschriebenen Verfahrens sind jedoch ohne weiteres auch auf das vorliegende Ausführungs-beispiel übertragbar.

## Patentansprüche

1. Coriolis-Massendurchflußmeßgerät, mit einem Meßrohr (1) zum Führen eines strömenden Mediums, einer Schwingungserzeugungseinrichtung (2) mit einem Schwingungserzeuger (3) zur Schwingungsanregung des Meßrohrs (1) und einer Schwingungsaufnahmeeinrichtung (5) mit einem Schwingungsaufnehmer (7) zur Erfassung von Schwingungen des Meßrohrs, **dadurch gekennzeichnet, daß** ein erstes Gegenelement (11) vorgesehen ist, das der Schwingungserzeugungseinrichtung (2) auf der gleichen Länge des Meßrohrs (1) gegenüberliegt, ein zweites Gegenelement (12) vorgesehen ist, das der Schwingungsaufnahmeeinrichtung (5) auf der gleichen Länge des Meßrohrs (1) gegenüberliegt, die Masse des ersten Gegenelements (11) der Masse der Schwingungserzeugungseinrichtung (2) entspricht und die Masse des zweiten Gegenelements (12) der Masse der Schwingungsaufnahmeeinrichtung (5) entspricht, wobei wenigstens ein Gegenelement (11, 12) ein Gegengewicht (19, 20) aufweist.

2. Coriolis-Massendurchflußmeßgerät nach Anspruch 1, **dadurch gekennzeichnet, daß** wenigstens eine weitere Schwingungserzeugungseinrichtung mit einem Schwingungserzeuger zur Schwingungsanregung des Meßrohrs (1) oder/und eine weitere Schwingungsaufnahmeeinrichtung (6) mit einem Schwingungsaufhehmer (9) zur Erfassung von Schwingungen des Meßrohrs (1) vorgesehen ist, wobei jeweils ein Gegenelement (13) vorgesehen ist, dessen Masse der Masse der Schwingungserzeugungseinrichtung bzw. der Masse der Schwingungsaufnahmeeinrichtung (6) entspricht und das der Schwingungserzeugungseinrichtung bzw. der Schwingungsaufnahmeeinrichtung (6) auf der jeweils gleichen Länge des Meßrohrs (1) gegenüberliegt.

3. Coriolis-Massendurchflußmeßgerät nach Anspruch 1 oder 2, **dadurch gekennzeichnet, daß** wenigstens eine Schwingungserzeugungseinrichtung (2) oder/und wenigstens eine Schwingungsaufnahmeeinrichtung (5, 6) jeweils ein Zusatzgewicht (4, 8, 10) aufweist.

4. Coriolis-Massendurchflußmeßgerät nach einem der Ansprüche 1 bis 3, **dadurch gekennzeichnet, daß** alle Gegenelemente (11, 12, 13) jeweils ein Gegengewicht (19, 20, 21) aufweisen.

5. Coriolis-Massendurchflußmeßgerät nach Anspruch 4, **dadurch gekennzeichnet, daß** wenigstens ein Gegenelement (11, 12, 13) einen Schwingungserzeuger (23, 24) oder einen Schwingungsaufnehmer (22) aufweist.

6. Verfahren zur Herstellung eines Coriolis-Massendurchflußmeßgeräts, mit einem Meßrohr (1) zum Führen eines strömenden Mediums, einer Schwingungserzeugungseinrichtung (2) mit einem Schwingungserzeuger (3) zur Schwingungsanregung des Meßrohrs (1) und einer Schwingungsaufnahmeeinrichtung (5) mit einem Schwingungsaufnehmer (7) zur Erfassung von Schwingungen des Meßrohrs (1), **dadurch gekennzeichnet, daß** ein erstes Gegenelement (11) vorgesehen wird, das der Schwingungserzeugungseinrichtung (2) auf der gleichen Länge des Meßrohrs (1) gegenüberliegt, ein zweites Gegenelement (12) vorgesehen wird, das der Schwingungseinrichtung (5) auf der gleichen Länge des Meßrohrs (1) gegenüberliegt, die Masse der Schwingungserzeugungseinrichtung (2) und die Masse der Schwingungsaufnahmeeinrichtung (5) variiert wird, wobei die Masse des ersten Gegenelements (11) jeweils derart gewählt wird, daß sie der Masse der Schwingungserzeugungseinrichtung (2) entspricht, und die Masse des zweiten Gegenelements (12) jeweils derart gewählt wird, daß sie der Masse der Schwingungsaufnahmeeinrichtung (5) entspricht, und für eine vorbestimmte Anregungsfrequenz des Meßrohrs (1) bestimmt wird, bei welcher jeweiligen Masse der Schwingungserzeugungseinrichtung (2) bzw. der Schwingungseinrichtung (5) die geringsten Schwingungsverluste auftreten.

7. Verfahren nach Anspruch 6, **dadurch gekennzeichnet, daß** die Bestimmung, bei welcher jeweiligen Masse der Schwingungserzeugungseinrichtung (2) bzw. der Schwingungsaumahmeeinrichtung (5) die geringsten Schwingungsverluste auftreten, darüber erfolgt, bei welcher jeweiligen Masse der Schwingungserzeugungseinrichtung (2) bzw. der Schwingungsaufnahmeeinrichtung (5) die geringste Schwingungsamplitude an den Enden des Meßrohrs (1) erzielt wird.

8. Verfahren nach Anspruch 6, **dadurch gekennzeichnet, daß** die Bestimmung, bei welcher jeweiligen Masse der Schwingungserzeugungseinrichtung (2) bzw. der Schwingungsaufnahmeeinrichtung (5) die geringsten Schwingungsverluste auftreten, darüber erfolgt, bei welcher jeweiligen Masse der Schwingungserzeugungseinrichtung 2 bzw. der Schwingungsaufnahmeeinrichtung (5) die geringste Anregungsleistung zur Erzielung einer vorbestimmten Schwingungsamplitude erforderlich ist.

9. Verfahren nach einem der Ansprüche 6 bis 8, **dadurch gekennzeichnet, daß** als vorbestimmte Anregungsfrequenz des Meßrohrs (1) eine Resonanzfrequenz des Meßrohrs (1), vorzugsweise im vom Medium durchströmten Zustand des Meßrohrs (1), gewählt wird.

10. Verfahren nach einem der Ansprüche 6 bis 9, **dadurch gekennzeichnet, daß** zum Variieren der Masse der Schwingungserzeugungseinrichtung (2) und/ oder der Masse der Schwingungsaufnahmeeinrichtung (5) der Schwingungserzeugungseinrichtung (2) bzw. der Schwingungsaufnahmeeinrichtung (5) jeweils ein Zusatzgewicht (4, 8) hinzugefügt wird.
